# FASCICULE DE BREVET EUROPEEN

(11) **EP 2 763 874 B1**
(45) Date de publication et mention de la délivrance du brevet: **18.11.2015**
(21) Numéro de dépôt: 12768862.0
(22) Date de dépôt: 05.10.2012
(51) Int. Cl.: B60R 22/26, B60R 22/28

(54) **ARRIMAGE TEXTILE DE CEINTURE DE SECURITE**
SICHERHEITSGURTBEFESTIGUNG AUS EINEM TEXTILSTOFF
TEXTILE FASTENING FOR SAFETY BELT

(30) Priorité: 07.10.2011 FR 1103054
(43) Date de publication de la demande: 13.08.2014
(73) Titulaire: Expliseat SAS, 75006 Paris (FR)
(72) Inventeur: TEJEDOR, Vincent, F-33700 MERIGNAC (FR)
(74) Mandataire: Ahner, Philippe
(86) Numéro de dépôt international: PCT/EP2012/069763
(87) Numéro de publication internationale: WO 2013/050555

(56) Documents cités:
- EP-B1- 0 911 229
- WO-A1-2005/030538
- FR-A1- 2 400 917
- FR-A1- 2 750 095
- JP-A- 62 214 036
- US-A- 3 532 380
- US-B1- 7 591 510

## Description

### DOMAINE TECHNIQUE

La présente invention appartient au domaine du transport collectif de passagers, notamment par la route, le rail ou l'air. Elle vise plus particulièrement la réalisation d'un système ou principe d'arrimage d'une ceinture de sécurité à une structure rigide, pour des sièges individuels ou pour des bancs ou ensembles de sièges. Elle concerne une bande textile, ainsi qu'un siège, un ensemble de sièges et un véhicule comportant une telle bande textile, et également un procédé et un dispositif d'arrimage associés.

### ÉTAT DE LA TECHNIQUE ANTÉRIEURE

Les sièges permettant le transport de passagers doivent répondre à des normes exigeantes en cas d'accident. Le passager ne doit pas être projeté dans l'habitacle, et est pour ce faire retenu par une ceinture de sécurité. Les contraintes varient selon le mode de déplacement utilisé, les plus drastiques s'appliquant au transport aérien.

Dans le cadre du transport individuel par automobile, de nombreux travaux ont perfectionné l'invention originale des « bretelles protectrices » de Gustave Désiré Lebeau (brevet déposé en 1903): adaptation de la position de la ceinture en fonction de la morphologie du passager (WO 92/22442), ajout d'un prétendeur de ceinture pour limiter le risque de cisaillement (WO 98/34817), perfectionnement des boucles d'attache (WO 2006/080252).

Dans le cadre du transport collectif de passager, la ceinture de sécurité reste souvent un dispositif à deux points d'accroche, sans prétendeur. La ceinture s'attache aux deux extrémités de l'angle dossier/assise du siège, et le passager règle la taille de la ceinture en faisant coulisser le tenant libre dans la boucle de la ceinture de sécurité. Les deux extrémités de la ceinture, au niveau des points d'attache, sont attachées à une structure rigide, généralement en acier ou en aluminium. Cette structure est elle-même arrimée au siège par un système de vis, de rivet ou de mousqueton.

On connaît différents principes de fixation de ceintures de sécurité dans l'art antérieur. La demande de brevet FR 2 750 095 A1 décrit un système de fixation pour l'ancrage d'une ceinture de sécurité arrimée par couture autour d'une barre de la structure du véhicule. La demande de brevet FR 2 400 917 A1 décrit un dispositif de maintien d'une ceinture de sécurité par couture autour d'une barre horizontale. Le brevet US 7,591,510 décrit une ceinture de sécurité adaptée pour les enfants et fixée à une barre fixe par couture. La demande de brevet JP 62-214036 A décrit un véhicule pour deux passagers et l'usage d'une ceinture de sécurité pourvue de moyens de fixation détachables.

La fonction principale de la ceinture de sécurité est de retenir le passager lors d'un choc. La ceinture doit ainsi arrêter le passager et transférer son énergie cinétique à la structure. Une légère élasticité de la ceinture permet d'amortir le choc subi par la structure et par le passager. L'arrimage permet le transfert d'énergie entre la ceinture et la structure, il doit être dimensionné en sorte de résister à la force exercée par le passager en cas de choc.

La technique habituelle d'arrimage de la ceinture de sécurité consiste à coudre une extrémité de la ceinture autour d'une pièce métallique, généralement en acier. Cette pièce métallique peut alors être arrimée à la structure du siège, soit de façon rigide au moyen de vis, soit au moyen d'un mousqueton. Les vis utilisées doivent être extrêmement solides : la norme dans le milieu aéronautique préconise des vis AN6 en acier, à tête hexagonale et de diamètre 3/8^{ème} de pouce, soit environ 9,5 mm. Les mousquetons peuvent être plus légers, mais ils nécessitent pour s'arrimer un axe qui s'ajoute en général à la structure du siège.

La résistance du système d'arrimage conventionnel nécessite ainsi des pièces métalliques relativement lourdes. La conception moderne des moyens de transport tente de limiter autant que possible le poids de la structure : plus le poids à vide est important, plus le moyen de transport aura besoin d'énergie pour se mouvoir, et plus il émettra de gaz à effet de serre. En limitant le poids, le système ou principe d'arrimage selon l'invention contribue à la protection de l'environnement.

Au-delà du poids important des techniques habituelles d'arrimage, s'ajoute une complexité liée au grand nombre de pièces : l'attache métallique cousue au niveau de la ceinture, les vis ou le mousqueton, ainsi que la zone d'accroche au niveau de la structure du siège. Dans le cas du transport commercial de passager, notamment dans l'industrie aéronautique, la qualité et le suivi de chacune de ces pièces induit une grande complexité lors de la fabrication du siège, et parfois après sa vente en cas de suivi des pièces.

Au niveau de la sécurité des personnes, la présence de pièces métalliques dans l'habitacle est toujours un handicap : en cas de choc inhabituel, par exemple d'un passager debout contre le système d'arrimage de la ceinture, les pièces métalliques constituent des objets contondants. Ils peuvent causer des lésions plus importantes que la structure nue à cause de leur rigidité et de la présence d'arêtes, que ce soit au niveau des vis ou au niveau du mousqueton.

Enfin, à nouveau en terme environnemental, le recyclage d'un grand nombre de petites pièces est toujours malaisé, surtout quand elles ne sont pas toutes constituées du même matériau. En limitant le nombre de pièces constituant le système d'arrimage de la ceinture de sécurité, on facilite son recyclage.

### EXPOSÉ DE L'INVENTION

L'invention a pour but de remédier au moins partiellement aux besoins mentionnés ci-dessus et aux inconvénients relatifs aux réalisations de l'art antérieur.

En particulier, la présente invention a été conçue dans l'esprit des problématiques citées précédemment : simplification du système ou principe d'arrimage de la ceinture de sécurité au siège, diminution de son poids et de son volume, amélioration de la sécurité du passager et respect de l'environnement. L'invention est particulièrement avantageuse pour le transport collectif de passagers, notamment par la route, le rail ou l'air.

La présente invention propose de ce fait un système ou principe d'arrimage de la ceinture de sécurité de très faible poids et de faible complexité, tout en maintenant un très haut niveau de sécurité. Ce système utilise les excellentes propriétés mécaniques des textiles innovants, et intègre dès la conception du siège la problématique de l'arrimage de la ceinture de sécurité. Il n'est ainsi plus nécessaire d'avoir un arrimage métallique de la ceinture à la structure du siège.

Ainsi, l'invention a pour objet, selon l'un de ses aspects, une bande textile formant au moins en partie une ceinture de sécurité destinée à être arrimée à une structure fixe d'un siège ou d'un habitacle, caractérisée en ce qu'une entaille est formée sur la bande textile pour permettre le repliage de la bande textile sur elle-même de façon à entourer la structure fixe du siège ou de l'habitacle par insertion d'une extrémité de la bande textile dans l'entaille pratiquée dans la bande textile.

L'entaille peut être réalisée par découpage de la bande textile dans le sens de la trame et de la chaîne.

Afin d'éviter que des extrémités de fils libres ne s'effilochent par frottement et abrasion et que l'entaille ne se propage, un renforcement d'au moins une partie du contour de l'entaille peut être effectué.

Au moins une partie du contour de l'entaille peut être renforcée par un repliement d'une partie découpée de la bande textile sur la bande textile et couture de la partie découpée sur la bande textile.

Au moins une partie du contour de l'entaille peut être renforcée par un surfilage.

Au moins une partie du contour de l'entaille peut être renforcée par l'ajout d'un matériau entourant ladite au moins une partie du contour de l'entaille, ce matériau étant cousu sur la bande textile de part et d'autre de ladite au moins une partie du contour de l'entaille.

Au moins une partie du contour de l'entaille peut être renforcée par l'ajout d'un métal et/ou d'un matériau durcissable sur ladite au moins une partie du contour de l'entaille. La bande textile peut comporter deux sous-bandes textiles cousues ensemble longitudinalement bord à bord, partiellement de façon à former l'entaille entre les bords non cousus des deux sous-bandes.

La bande textile peut comporter deux sous-bandes textiles cousues ensemble longitudinalement face sur face, partiellement de façon à former l'entaille entre les faces non cousues des deux sous-bandes.

L'invention a encore pour objet, selon un autre de ses aspects, un siège caractérisé en ce qu'il comporte une bande textile telle que définie précédemment.

Un amortisseur peut être inséré entre la bande textile et la structure fixe. L'amortisseur peut être constitué d'un gel, dissipant un choc par déformation et par échauffement. L'amortisseur peut encore être constitué d'une mousse retardant un choc par déformation, éventuellement élastique.

La bande textile peut entourer la structure fixe sans fixation intermédiaire.

L'invention a encore pour objet, selon un autre de ses aspects, un ensemble d'au moins deux sièges adjacents comportant des premier et deuxième sièges adjacents, caractérisé en ce qu'au moins l'un des premier et deuxième sièges est un siège tel que défini précédemment, et en ce que la bande textile forme au moins en partie la ceinture de sécurité du premier siège et la ceinture de sécurité du deuxième siège.

L'invention a encore pour objet, selon un autre de ses aspects, un véhicule comportant un siège tel que défini précédemment ou un ensemble tel que défini précédemment.

Par « véhicule », on entend tout moyen de transport ou de déplacement d'au moins un passager, par exemple un avion, une voiture, un train, une poussette, une cabine de téléphérique, un télésiège, un bateau, une nacelle d'une attraction à sensation forte, entre autres.

La bande textile peut être arrimée à une structure fixe d'au moins un siège. La bande textile peut encore être arrimée à une structure fixe de l'habitacle du véhicule.

L'invention a encore pour objet, selon un autre de ses aspects, un procédé d'arrimage de ceinture de sécurité à une structure fixe d'un siège ou d'un habitacle, caractérisé en ce qu'il comporte l'étape suivante :
- on replie une bande textile telle que définie précédemment, comportant une entaille, sur elle-même pour former une boucle de bande textile entourant la structure fixe du siège ou de l'habitacle en insérant une extrémité de la bande textile dans l'entaille pratiquée dans la bande textile.

Dans la présente demande, les termes « trou » et « entaille » désignent la même chose.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 est une vue en perspective d'un ensemble (ou banc) de trois sièges adjacents conforme à l'invention, associée au repère orthogonal utilisé,
- la figure 2 est une vue de face d'une bande textile avec entaille selon l'invention placée autour d'une structure fixe, avec deux extrémités utilisables de la bande,

- la figure 3 est une vue de face d'une bande textile avec entaille selon l'invention placée autour d'une structure fixe, avec une extrémité utilisable de la bande,
- les figures 4 à 7 illustrent des alternatives de réalisation et/ou de renforcement d'une entaille pour une bande textile selon l'invention,
- la figure 8 est une vue de profil d'une bande textile selon l'invention montrant l'insertion d'un amortisseur entre la boucle de bande textile et la structure fixe.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

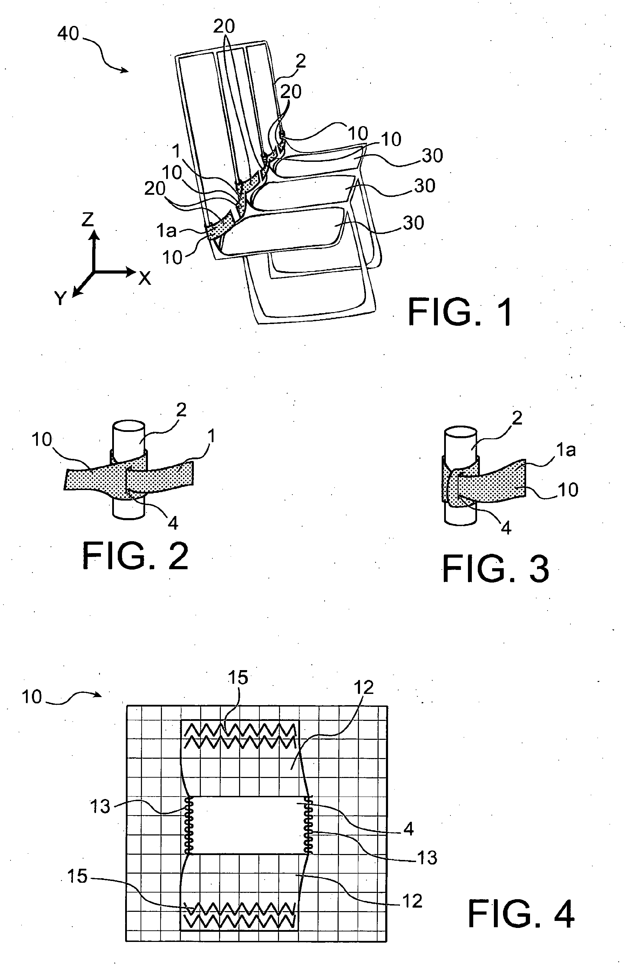

Il va être décrit ci-après, en référence aux figures 1 à 8, des exemples de mise en oeuvre de l'invention.

On a représenté sur la figure 1, en perspective, un exemple d'ensemble 40 selon l'invention comportant trois sièges 30 adjacents et quatre bandes textiles 10 selon l'invention.

Chaque bande textile 10 forme en partie une ceinture de sécurité 20 d'un siège 30. En particulier, chaque bande textile 10 située à une extrémité de l'ensemble 40 forme la moitié de la ceinture de sécurité 20 du siège 30 correspondant, et les deux bandes textiles 10 centrales forment chacune une moitié d'une première ceinture de sécurité 20 et une moitié d'une deuxième ceinture de sécurité 20.

Chaque bande textile 10 est arrimée sur une structure fixe 2 d'un siège 30 selon un procédé d'arrimage conforme à l'invention.

La fonction du système ou principe d'arrimage de la ceinture de sécurité est de transférer les efforts subis par le passager en cas de choc à la structure. La ceinture de sécurité est ainsi attachée lors du voyage, enserrant le passager. Lors d'un choc, le passager est projeté vers l'avant (axe X de la figure 1), et est retenu par la ceinture de sécurité. La ceinture exerce alors une force principalement selon l'axe X, éventuellement selon l'axe Y en cas de choc latéral, et plus rarement selon l'axe Z en cas de tonneau ou de chute libre. La vitesse du passager relativement au sol étant selon l'axe X, la plupart des chocs ont lieu selon cette direction.

Pour un transfert optimal de la force de la ceinture à la structure, il convient de minimiser le nombre de pièces intermédiaires. Chaque pièce supplémentaire peut en effet être un point de faiblesse de la chaîne de transfert, alourdit le système d'arrimage, et augmente la complexité du montage et le suivi des pièces.

Le système ou principe d'arrimage selon l'invention peut assurer une transmission, sans fixation intermédiaire, des efforts subis par la ceinture de sécurité. La ceinture de sécurité est repliée sur elle-même pour former une boucle, laquelle boucle enserre une partie fixe du siège ou de l'habitacle. Lors d'un choc, la boucle est plaquée contre la partie fixe de la structure, et transfère ainsi l'effort. Quelque soit le mode de formation de la boucle, il est toujours plus favorable d'avoir une boucle de largeur plus grande que le reste de la ceinture, afin de répartir l'effort sur une grande surface de la structure fixe, et diminuer en proportion la pression exercée localement sur cette structure.

Pour que le système d'arrimage puisse fonctionner, il faut que la boucle puisse être entourée autour de la structure, puis que lors du choc, la boucle ne se désagrège pas. La formation de la boucle est réalisée par insertion (passage d'une extrémité de la bande textile dans une entaille).

Chaque bande textile 10 peut ainsi être réalisée conformément à ce qui a été décrit précédemment.

Par exemple, la bande textile peut comporter une entaille 11 pour permettre le repliage de la bande textile 10 sur elle-même de façon à entourer une structure fixe 2 d'un siège 30 ou de l'habitacle d'un véhicule comportant le siège, par insertion d'une extrémité 1 ou la de la bande textile 10 dans l'entaille 11 pratiquée dans celle-ci. Un tel mode de réalisation est illustré en référence aux figures 2 à 7.

Les figures 2 et 3 illustrent le positionnement de la bande textile 10 autour d'une structure fixe 2 d'un siège 30 ou d'un habitacle, par insertion d'une extrémité 1 ou 1a de la bande textile 10 au travers d'une entaille 4 pratiquée dans la bande textile 10.

Plus particulièrement, la figure 2 montre un exemple de formation de boucle par insertion, une des extrémités libres 1 formant une boucle autour de la structure fixe 2 avant de s'insérer dans l'entaille 4 présente sur la bande textile 10, notamment l'autre extrémité libre, de façon à former deux extrémités utilisables. La figure 3 adapte cette boucle au cas où seule une extrémité 1a de la boucle est libre : dans ce cas, l'extrémité libre 1a est nécessairement celle s'insérant dans l'entaille 4, laquelle est formée dans l'autre extrémité.

Dans le cas d'une boucle réalisée par insertion ou entaille, le genre topologique de la structure fixe 2 est sans importance : la boucle peut être formée autant de fois que nécessaire par simple passage d'une extrémité 1 ou 1a de la bande textile 10 au sein d'une entaille 4 pratiquée dans l'autre extrémité de la bande. L'entaille 4 doit être réalisée en sorte de ne pas limiter le transfert des efforts dans le sens de la bande textile 10, et en sorte de ne pas fragiliser le textile traversant l'entaille 4. En particulier, les fils de trame ne doivent pas être coupés au niveau de l'entaille 4, et les bords de l'entaille 4 doivent être renforcés pour ne pas effilocher la bande textile 10 la traversant, ou être fragilisés par cette dernière.

En terme de résistance au choc, l'entaille 4 est un point de faiblesse potentiel de la structure fixe 2, et doit par conséquent être aussi petite que possible. Le transfert de force à la structure fixe 2 est comparable au cas d'une boucle cousue. L'avantage de la formation par insertion ou entaille est sa flexibilité : la boucle peut facilement être défaite et refaite, permettant un remplacement aisé de la ceinture de sécurité en cas de détérioration de la bande textile ou de l'attache. Un système supplémentaire de blocage réversible de la boucle peut être aménagé pour se prémunir de la possibilité pour le passager de défaire sans outil le système d'arrimage. Une alternative consiste à ne pas laisser la boucle accessible, l'assise ou le dossier pouvant masquer le système d'arrimage de la ceinture.

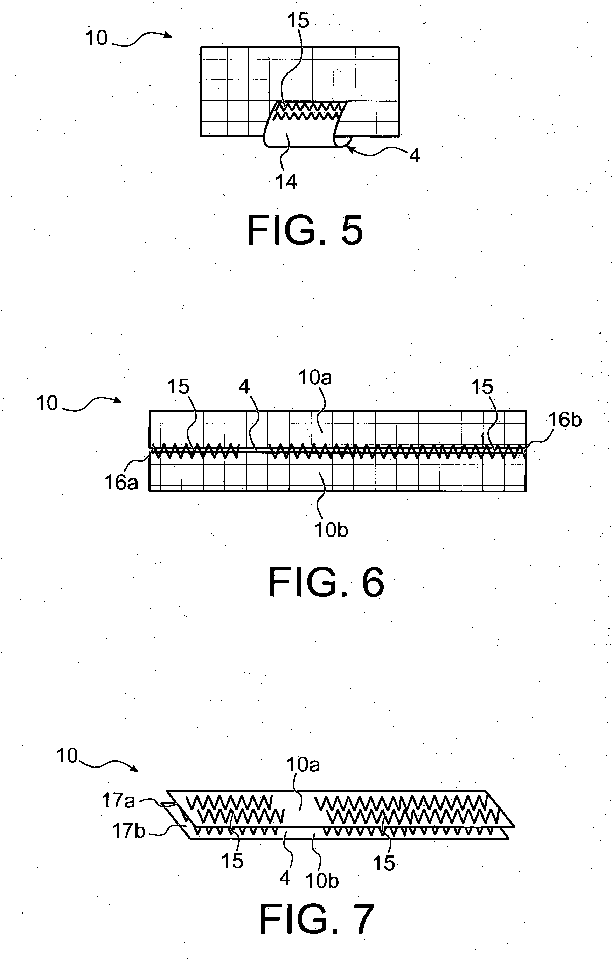

On a illustré sur les figures 4 et 5, schématiquement et partiellement, des réalisations pour permettre un renforcement d'au moins une partie du contour d'une entaille 4 d'une bande textile 10.

Dans les deux cas, la bande textile 10 est découpée afin de former l'entaille 4.

Le tissu formant une ceinture de sécurité 20 est traditionnellement orienté dans deux directions privilégiées, la trame et la chaîne, l'une des deux directions étant dans l'axe de la bande textile 10. De préférence, l'entaille 4 est découpée dans le sens de la trame et de la chaîne.

Sur la figure 4, on a représenté la possibilité d'améliorer la résistance à l'usure de l'entaille 4 par repliement de parties découpées 12 de la bande textile 10 sur elle-même, ces parties découpées 12 étant cousues en double épaisseur au niveau de coutures 15 sur la bande textile 10. Le frottement a ainsi lieu au niveau de fils continus, et non plus au niveau d'extrémités de fils plus fragiles.

Par ailleurs, un surfilage 13 peut également être pratiqué sur au moins une partie du contour de l'entaille 4.

Sur la figure 5, on a illustré la possibilité d'utiliser un matériau 14 entourant au moins une partie du contour de l'entaille 4, le matériau 14 étant cousu sur la bande textile 10 au niveau de coutures 15, de part et d'autre du contour de l'entaille 4. Le frottement peut ainsi se faire au niveau du textile ajouté par le matériau 14 et non au niveau de fils de la bande textile 10.

Une autre possibilité (non illustrée), peut consister à ajouter au niveau de la frontière de l'entaille 4, un métal tel l'acier inoxydable, l'aluminium ou le titane, apte à pincer les extrémités libres des fils de la bande textile 10, ou un matériau durcissable tel qu'une résine thermodurcissable ou une résine thermoplastique, apte à agglomérer les extrémités libres des fils de la bande textile 10. Ces deux possibilités permettent d'éviter un effilochage.

Les figures 6 et 7 illustrent deux possibilités pour réaliser une bande textile 10 selon l'invention avec entaille 4.

Selon ces deux possibilités, l'entaille 4 est créée par couture de deux sous-bandes textiles 10a et 10b sur toute leur longueur, excepté au niveau de l'entaille 4. La couture 15 peut être très résistante et le contour de l'entaille 4 peut être constitué ainsi de fils continus et non de fils découpés.

Les deux sous-bandes textiles 10a et 10b peuvent être cousues selon leur bord 16a et 16b longitudinalement, comme illustré sur la figure 6, excepté au niveau de l'entaille 4.

En variante, les deux sous-bandes textiles 10a et 10b peuvent être cousues par leur face 17a et 17b, excepté au niveau de l'entaille 4 destinée à être formée.

Dans le cas présenté précédemment, le nombre de pièces constituant le système d'arrimage de la ceinture de sécurité 20 est grandement réduit par rapport à un système conventionnel. Ceci simplifie grandement l'assemblage, même si l'arrimage de la ceinture doit être intégré lors de la fabrication du siège 30, une partie de la structure fixe 2 devant pouvoir être entourée par la ceinture de sécurité 20. Cela simplifie également le suivi de la qualité des pièces : pour les éléments de sécurité, le suivi des pièces est une partie intégrante de la démarche qualité. Dans le cas du transport par aéronef par exemple, le fabricant doit garder la trace de toutes les opérations effectuées sur une pièce destinée à être embarquée. En minimisant le nombre de pièces et d'opérations, ce système d'arrimage facilite le suivi des pièces.

Pour limiter la contrainte que constitue la formation de la boucle textile lors de la fabrication du siège 30 il est possible d'augmenter la flexibilité du système d'arrimage tout en réduisant le poids par rapport à un système d'accroche traditionnel.

Un tel système est moins économe en poids qu'un système textile continu de l'arrimage de la ceinture de sécurité, le support solide intermédiaire et le mousqueton devant être rajoutés, mais il est beaucoup plus flexible. Il allie la flexibilité du système d'arrimage traditionnel et l'arrimage textile au niveau de la structure, ce qui diminue légèrement le poids de l'ensemble par rapport à un ensemble traditionnel.

Le système d'arrimage peut remplir une autre fonction en sus de celle consistant à transférer les efforts de la ceinture 20 à une structure fixe 2 : il peut amortir le choc pour transférer les efforts de façon plus douce, et éviter la déformation ou l'explosion de la structure fixe 2. La stratégie conventionnelle repose sur l'élasticité de la bande textile 10 de la ceinture de sécurité 2 : en s'étirant de façon élastique lors du choc, la ceinture 20 étire le temps du transfert d'énergie, et diminue ainsi l'intensité de la force exercée sur la structure fixe 2. Mais cette stratégie est limitée par le choc frontal du passager : si la ceinture 20 s'étire trop, le passager risque de s'écraser devant le siège 30 ou devant une autre structure fixe de l'habitacle.

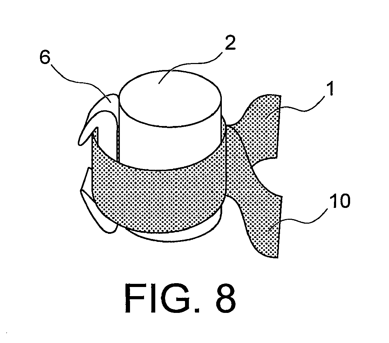

La figure 8 illustre la possibilité d'agrémenter le système d'arrimage d'un amortisseur 6, par exemple de type gel ou mousse, diminuant ainsi la pression exercée sur la structure fixe 2. L'amortisseur 6 agit sur deux plans : d'une part, il peut se déformer, en étirant dans le temps le transfert d'énergie, et diminuant ainsi la force exercée sur l'ensemble de la structure fixe 2 ; d'autre part, il peut répartir cette force sur une surface plus grande, diminuant ainsi la pression exercée localement sur la structure fixe 2.

La déformation élastique du gel ou de la mousse est analogue à l'élasticité de la ceinture de sécurité 20, sauf que la déformation se joue sur l'épaisseur de l'amortisseur 6 et non sur la longueur de la ceinture 20 : avec le même débattement, il est possible de ralentir le choc de façon plus efficace. La répartition spatiale peut être effectuée grâce à la boucle textile : lors du choc, l'amortisseur 6 placé entre la boucle et la structure fixe 2 est plaqué contre la structure fixe 2. Si la forme de l'amortisseur 6 épouse celle de la structure fixe 2, la surface de contact n'est plus celle de la boucle, mais celle de l'amortisseur 6, potentiellement beaucoup plus grande. La difficulté consiste à ce que l'amortisseur 6, par définition déformable, reste en position entre la pose de la boucle et l'occurrence du choc. Sur la figure 10, l'amortisseur 6 est inséré dans la boucle textile, plaqué contre la structure fixe 2 : sa forme, concave du côté de la boucle, lui permet de rester en place, et la surface en contact avec la structure fixe 2 est plus importante que celle qu'aurait eue la boucle textile.

Par ailleurs, comme il ressort de la figure 1, une possibilité du principe d'arrimage de l'invention consiste à coupler deux ceintures 20 adjacentes. Actuellement, deux ceintures adjacentes ont chacune leur point d'accroche à la structure fixe et leur bande textile. En formant une boucle textile, il est possible d'utiliser une ou deux des extrémités de la boucle pour les ceintures de sécurité 20. La figure 1 montre le cas d'un banc de trois places, où seules quatre bandes textiles 10 (deux doubles 1 et deux simples 1a) sont nécessaires pour réaliser les trois ceintures de sécurité 20, au lieu de six actuellement.

Pour les boucles ayant deux extrémités libres 1, il faut prendre garde que les deux ceintures de sécurité 20 sont indépendantes : il est tout à fait possible que lors du choc, une des deux ceintures ne soit pas utilisée. La boucle doit ainsi pouvoir fonctionner avec un ou deux passagers, sans interaction entre les deux passagers si ils sont présents simultanément lors du choc. En pratique, seule la structure collée garantie une indépendance rigoureuse entre les deux ceintures. Dans le cas d'une boucle cousue ou insérée, cette dernière peut légèrement tournée autour de l'axe de la structure fixe 2 selon l'ordre des chocs. Un premier choc sur la droite tendra à déplacer le point de jonction des deux extrémités libres vers la droite, avant qu'un second sur la gauche ne tire à nouveau sur le point de jonction.

Ce léger couplage entre les deux extrémités n'est pas nécessairement gênant, le déplacement du point de jonction étant un amorti supplémentaire du choc, quoique faible. Il est par contre important de dimensionner la résistance du point de jonction à ces deux efforts latéraux successifs, et de concevoir l'amortisseur en sorte qu'il puisse être efficace pour les deux chocs, y compris après rotation de la boucle textile.

Les matériaux choisis pour former la boucle textile ou bande textile 10 doivent respecter les normes en vigueur en fonction du mode de transport visé, en particulier en terme de toxicité, d'inflammabilité ou de transmission de chaleur.

La résistance mécanique de la bande textile 10 devant être suffisante pour retenir un passager lors d'un choc. Les fibres polyamides (par exemple le nylon) ou aramides (par exemple le Kevlar® ou le Twaron®) sont particulièrement adaptées à sa fabrication.

La boucle textile transfère le choc subi par le passager à la structure fixe 2 du siège ou de l'habitacle. Pour que le choc puisse être transmis *in fine* à l'habitacle, il convient d'avoir une structure de topologie cylindrique au niveau du point de fixation de la ceinture, suffisamment résistante. Ceci nécessite de penser dès la conception du siège 30 à l'attache de la ceinture : cette dernière ne peut s'adapter à tout type de siège par simple vissage.

Pour optimiser le transfert d'énergie lors du choc, et en particulier pour le répartir sur une surface aussi grande que possible, il convient d'élargir la bande textile 10 au niveau de la boucle. Le transfert se faisant par la partie de la boucle textile en contact avec la structure 2, plus la boucle est large, plus grande sera la surface de contact, et plus la pression exercée sur le matériau sera faible.

Dans plusieurs des modes de réalisation ici présentés, la boucle textile est formée lors de la fabrication de la ceinture. Elle doit donc dans certains cas être insérée autour de la structure 2 du siège 30 ou de l'habitacle lors de la réalisation de ces derniers, et non sur une structure finie. La formation de la boucle par insertion est à ce sujet la plus flexible.

La topologie cylindrique permet d'éviter les arrêtes qui peuvent effilocher progressivement la bande textile 10 avant un choc éventuel, par simple frottement. Elle facilite également la rotation de la boucle textile autour de l'axe de la structure 2, ce qui permet au passager de régler l'angle entre l'extrémité de la ceinture et le dossier du siège 30, afin qu'un confort minimal soit assuré.

Pour former la boucle textile par insertion (ou entaille), une des deux extrémités libres 1 ou la partie opposée à l'extrémité libre 1a doit être entaillée. L'entaille 4 doit être suffisamment large pour que l'extrémité non entaillée puisse passer à l'intérieur.

L'entaille 4 doit faire l'objet de plusieurs précautions. La première concerne sa fabrication : il convient autant que possible de ne pas simplement découper une bande textile, mais de tisser la bande textile en laissant un espace libre. En pratique, cela signifie que la trame du textile de la ceinture doit être ouverte au niveau de l'entaille 4, et que la chaîne est interrompue au niveau de l'entaille 4. La continuité de la trame, dans le sens de la bande textile 10, permet un transfert continu de la force en cas de choc, sans fil s'arrêtant au niveau de l'entaille 4. Cela évite une déchirure pure et simple de l'entaille 4.

La seconde précaution concerne les bords de la ceinture 20 et de l'entaille 4. Pour éviter que la friction entre ces deux parties n'entraîne un effilochage de la bande textile 10, il convient de surfiler les bords de l'entaille 4 et la partie de la bande textile 10 qui s'y insère, sur une longueur de l'ordre du centimètre pour tenir compte des débattements liés à l'utilisation de la ceinture de sécurité 20.

Enfin, pour éviter que la boucle ne soit trop lâche, la partie de la bande textile 10 s'insérant dans l'entaille 4 peut être légèrement plus large au sortir de l'entaille 4. Lors de l'insertion dans l'entaille 4, l'extrémité libre peut être repliée dans le sens perpendiculaire à celui de la bande textile 10, puis dépliée après insertion. Cela permet de faire passer une bande textile 10 plus large que la taille de l'entaille 4, et évite ensuite que l'entaille 4 ne navigue trop le long de la bande textile.

L'insertion d'un amortisseur 6, qu'il s'agisse d'un amortisseur gel ou mousse, doit se faire au moment de la formation de la boucle. La forme de l'amortisseur 6 doit lui permettre de rester au sein de la boucle au cours de la vie de la ceinture. En particulier, des vibrations ou des rotations fréquentes de la boucle ne doivent pas amener l'amortisseur 6 vers l'avant de la boucle. Une forme concave, où la bande textile 10 peut s'insérer au sein de la concavité en étant initialement pliée, garantit que l'amortisseur 6 ne sortira pas de la boucle. Une fixation légère à la bande textile 10, telle une colle ou une bande auto-agrippante, peut aider à maintenir l'amortisseur 6 en place.

L'amortisseur gel peut être réalisé en emprisonnant un silicone dans un sachet hermétique ayant la forme voulue. L'épaisseur est alors de quelques millimètres. Dans le cas d'un amortisseur mousse, le silicone est remplacé par une mousse, par exemple du polystyrène expansé. On peut soit remplir un sachet à l'aide de fragments de polystyrène expansé, soit sculpter un bloc de mousse pour lui donner la forme voulue.

Dans le cas d'une formation par insertion, il suffit de placer l'amortisseur 6 au centre de la boucle textile.

Bien entendu, l'invention n'est pas limitée aux exemples de réalisation qui viennent d'être décrits. Diverses modifications peuvent y être apportées par l'homme du métier.

## Revendications

1. Bande textile (10) formant au moins en partie une ceinture de sécurité (20) destinée à être arrimée à une structure fixe (2) d'un siège (30) ou d'un habitacle, **caractérisée en ce qu'**une entaille (4) est formée sur la bande textile (10) pour permettre le repliage de la bande textile (10) sur elle-même de façon à entourer la structure fixe (2) du siège (30) ou de l'habitacle par insertion d'une extrémité (1, 1a) de la bande textile (10) dans l'entaille (4) pratiquée dans la bande textile (10).

2. Bande textile selon la revendication 1, **caractérisée en ce que** l'entaille (4) est réalisée par découpage de la bande textile (10) dans le sens de la trame et de la chaîne.

3. Bande textile selon la revendication 1 ou 2, **caractérisée en ce qu'**au moins une partie du contour de l'entaille (4) est renforcée par un repliement d'une partie découpée (12) de la bande textile (10) sur la bande textile (10) et couture de la partie découpée (12) sur la bande textile (10).

4. Bande textile selon l'une des revendications précédentes, **caractérisée en ce qu'**au moins une partie du contour de l'entaille (4) est renforcée par un surfilage (13).

5. Bande textile selon l'une quelconque des revendications précédentes, **caractérisée en ce qu'**au moins une partie du contour de l'entaille (4) est renforcée par l'ajout d'un matériau (14) entourant ladite au moins une partie du contour de l'entaille (4), ce matériau (14) étant cousu sur la bande textile (10) de part et d'autre de ladite au moins une partie du contour de l'entaille (4).

6. Bande textile selon l'une quelconque des revendications précédentes, **caractérisée en ce qu'**au moins une partie du contour de l'entaille (4) est renforcée par l'ajout d'un matériau durcissable sur ladite au moins une partie du contour de l'entaille (4).

7. Bande textile selon l'une quelconque des revendications précédentes, **caractérisée en ce qu'**au moins une partie du contour de l'entaille (4) est renforcée par l'ajout d'un métal sur ladite au moins une partie du contour de l'entaille (4).

8. Bande textile selon l'une quelconque des revendications précédentes, **caractérisée en ce qu'**elle comporte deux sous-bandes textiles (10a, 10b) cousues ensemble longitudinalement bord (16a) à bord (16b), partiellement de façon à former l'entaille (4) entre les bords (16a, 16b) non cousus des deux sous-bandes (10a, 10b).

9. Bande textile selon l'une quelconque des revendications 1 à 7, **caractérisée en ce qu'**elle comporte deux sous-bandes textiles (10a, 10b) cousues ensemble longitudinalement face (17a) sur face (17b), partiellement de façon à former l'entaille (4) entre les faces (17a, 17b) non cousues des deux sous-bandes (10a, 10b).

10. Siège (30) **caractérisé en ce qu'**il comporte une bande textile (10) selon l'une quelconque des revendications précédentes.

11. Siège selon la revendication 10, **caractérisé en ce qu'**un amortisseur (6) est inséré entre la bande textile (10) et la structure fixe (2), l'amortisseur (6) étant notamment constitué d'un gel, dissipant un choc par déformation et par échauffement, ou d'une mousse retardant un choc par déformation, éventuellement élastique.

12. Siège selon la revendication 10 ou 11, **caractérisé en ce que** la bande textile (10) entoure la structure fixe (2) sans fixation intermédiaire.

13. Ensemble (40) d'au moins deux sièges adjacents comportant des premier et deuxième sièges adjacents, **caractérisé en ce qu'**au moins l'un des premier et deuxième sièges est un siège (30) selon l'une quelconque des revendications 10 à 12, et **en ce que** la bande textile (10) forme au moins en partie la ceinture de sécurité (20) du premier siège et la ceinture de sécurité (20) du deuxième siège.

14. Véhicule comportant un siège (30) selon l'une quelconque des revendications 10 à 12 ou un ensemble (40) d'au moins deux sièges adjacents selon la revendication 13, la bande textile (10) étant notamment arrimée à une structure fixe (2) d'au moins un siège (30) ou à une structure fixe (2) de l'habitacle du véhicule.

15. Procédé d'arrimage de ceinture de sécurité (20) à une structure fixe (2) d'un siège (30) ou d'un habitacle, **caractérisé en ce qu'**il comporte l'étape suivante :
- on replie une bande textile (10) selon l'une quelconque des revendications 1 à 9 sur elle-même pour former une boucle de bande textile entourant la structure fixe (2) du siège (30) ou de l'habitacle en insérant une extrémité (1, 1a) de la bande textile (10) dans l'entaille (4) pratiquée dans la bande textile (10).

## Patentansprüche

1. Textiles Band (10), das zumindest teilweise einen Sicherheitsgurt (20) bildet, der dazu bestimmt ist, an einen festen Aufbau (2) eines Sitzes (30) oder eines Fahrgastraums befestigt zu werden, **dadurch gekennzeichnet, dass** ein Einschnitt (4) am textilen Band (10) ausgebildet ist, um das Umlegen des textilen Bandes (10) auf dieses selbst zu gestatten, so dass es den festen Aufbau (2) des Sitzes (30) oder des Fahrgastraums durch Einführen eines Endabschnitts (1, 1a) des textilen Bandes (10) in den im textilen Band (10) ausgeführten Einschnitt (4) umgibt.

2. Textiles Band nach Anspruch 1, **dadurch gekennzeichnet, dass** der Einschnitt (4) durch Zuschneiden des textilen Bandes (10) in Schuss- und Kettrichtung ausgebildet ist.

3. Textiles Band nach Anspruch 1 oder 2, **dadurch gekennzeichnet, dass** zumindest ein Teil der Kontur des Einschnitts (4) durch Umlegen eines zugeschnittenen Abschnitts (12) des textilen Bandes (10) auf das textile Band (10) und durch Annähen des zugeschnittenen Abschnitts (12) auf das textile Band (10) verstärkt ist.

4. Textiles Band nach einem der vorangehenden Ansprüche, **dadurch gekennzeichnet, dass** zumindest ein Teil der Kontur des Einschnitts (4) durch Versäubern (13) verstärkt ist.

5. Textiles Band nach einem der vorangehenden Ansprüche, **dadurch gekennzeichnet, dass** zumindest ein Teil der Kontur des Einschnitts (4) durch Hinzufügen eines Materials (14) verstärkt ist, das den zumindest einen Teil der Kontur des Einschnitts (4) umgibt, wobei dieses Material (14) auf das textile Band (10) beiderseits des zumindest einen Teils der Kontur des Einschnitts (4) aufgenäht ist.

6. Textiles Band nach einem der vorangehenden Ansprüche, **dadurch gekennzeichnet, dass** zumindest ein Teil der Kontur des Einschnitts (4) durch Hinzufügen eines Materials verstärkt ist, das an dem zumindest einen Teil der Kontur des Einschnitts (4) aushärtbar ist.

7. Textiles Band nach einem der vorangehenden Ansprüche, **dadurch gekennzeichnet, dass** zumindest ein Teil der Kontur des Einschnitts (4) durch Hinzufügen eines Metalls an dem zumindest einen Teil der Kontur des Einschnitts (4) verstärkt ist.

8. Textiles Band nach einem der vorangehenden Ansprüche, **dadurch gekennzeichnet, dass** es zwei textile Unterbänder (10a, 10b) aufweist, die longitudinal von Rand (16a) zu Rand (16b) teilweise zusammengenäht sind, so dass sie den Einschnitt (4) zwischen den nicht vernähten Rändern (16a, 16b) der beiden Unterbänder (10a, 10b) bilden.

9. Textiles Band nach einem der Ansprüche 1 bis 7, **dadurch gekennzeichnet, dass** es zwei textile Unterbänder (10a, 10b) aufweist, die longitudinal Seite (17a) auf Seite (17b) teilweise zusammengenäht sind, so dass sie den Einschnitt (4) zwischen den nicht vernähten Seiten (17a, 17b) der beiden Unterbänder (10a, 10b) bilden.

10. Sitz (30), **dadurch gekennzeichnet, dass** er ein textiles Band (10) nach einem der vorangehenden Ansprüche aufweist.

11. Sitz nach Anspruch 10, **dadurch gekennzeichnet, dass** ein Dämpfungsglied (6) zwischen dem textilen Band (10) und dem festen Aufbau (2) eingesetzt ist, wobei das Dämpfungsglied (6) insbesondere aus einem Gel besteht, das einen Stoß durch Verformung und Erwärmung aufnimmt, oder aus einem Schaumstoff besteht, der einen Stoß durch Verformung verzögert und gegebenenfalls elastisch ist.

12. Sitz nach Anspruch 10 oder 11, **dadurch gekennzeichnet, dass** das textile Band (10) den festen Aufbau (2) ohne Zwischenbefestigung umgibt.

13. Anordnung (40) aus zumindest zwei aneinandergrenzenden Sitzen mit einem ersten und einem angrenzenden zweiten Sitz, **dadurch gekennzeichnet, dass** zumindest einer von dem ersten und dem zweiten Sitz ein Sitz (30) nach einem der Ansprüche 10 bis 12 ist und dass das textile Band (10) zumindest teilweise den Sicherheitsgurt (20) des ersten Sitzes und den Sicherheitsgurt (20) des zweiten Sitzes bildet.

14. Fahrzeug mit einem Sitz (30) nach einem der Ansprüche 10 bis 12 oder einer Anordnung (40) aus zumindest zwei aneinandergrenzenden Sitzen nach Anspruch 13, wobei das textile Band (10) insbesondere an einen festen Aufbau (2) zumindest eines Sitzes (30) oder an einen festen Aufbau (2) des Fahrgastraums des Fahrzeugs befestigt ist.

15. Verfahren zum Befestigen eines Sicherheitsgurtes (20) an einen festen Aufbau (2) eines Sitzes (30) bzw. eines Fahrgastraums, **dadurch gekennzeichnet, dass** es den nachfolgenden Schritt umfasst:
- Umlegen eines textilen Bandes (10) nach einem der Ansprüche 1 bis 9 auf dieses selbst, um eine Schlinge aus textilem Band zu bilden, die den festen Aufbau (2) des Sitzes (30) bzw. des Fahrgastraums durch Einführen eines Endabschnitts (1, 1a) des textilen Bandes (10) in den im textilen Band (10) ausgeführten Einschnitt (4) umgibt.

## Claims

1. Textile strip (10) forming at least partially a safety belt (20) intended to be fastened to a fixed structure (2) of a seat (30) or of a passenger compartment, **characterised in that** a notch (4) is formed on the textile strip (10) in order to allow for the folding of the textile strip (10) onto itself in such a way as to surround the fixed structure (2) of the seat (30) or of the passenger compartment via insertion of an end (1, 1a) of the textile strip (10) into the notch (4) made in the textile strip (10).

2. Textile strip according to claim 1, **characterised in that** the notch (4) is carried out by cutting the textile strip (10) in the direction of the weft and of the warp.

3. Textile strip according to claim 1 or 2, **characterised in that** at least one portion of the contour of the notch (4) is reinforced by a folding of a cut portion (12) of the textile strip (10) on the textile strip (10) and sewing of the cut portion (12) on the textile strip (10).

4. Textile strip according to one of the preceding claims, **characterised in that** at least one portion of the contour of the notch (4) is reinforced by extra sewing (13).

5. Textile strip as claimed in any preceding claim, **characterised in that** at least one portion of the contour of the notch (4) is reinforced by the adding of a material (14) surrounding said at least one portion of the contour of the notch (4), with this material (14) being sewn on the textile strip (10) on either side of said at least one portion of the contour of the notch (4).

6. Textile strip as claimed in any preceding claim, **characterised in that** at least one portion of the contour of the notch (4) is reinforced by the adding of a curable material on said at least one portion of the contour of the notch (4).

7. Textile strip as claimed in any preceding claim, **characterised in that** at least one portion of the contour of the notch (4) is reinforced by the adding of a metal on said at least one portion of the contour of the notch (4).

8. Textile strip as claimed in any preceding claim, **characterised in that** it comprises two textile sub-strips (10a, 10b) sewn together longitudinally edge (16a) to edge (16b), partially in such a way as to form the notch (4) between the unsewn edges (16a, 16b) of the two sub-strips (10a, 10b).

9. Textile strip according to any of claims 1 to 7, **characterised in that** it comprises two textile sub-strips (10a, 10b) sewn together longitudinally face (17a) to face (17b), partially in such a way as to form the notch (4) between the unsewn faces (17a, 17b) of the two sub-strips (10a, 10b).

10. Seat (30) **characterised in that** it comprises a textile strip (10) as claimed in any preceding claim.

11. Seat according to claim 10, **characterised in that** an absorber (6) is inserted between the textile strip (10) and the fixed structure (2), the absorber (6) being especially constituted of a gel, dissipating an impact by deformation and by heating, or of a foam delaying an impact by deformation, possibly elastic.

12. Seat according to claim 10 or 11, **characterised in that** the textile strip (10) surrounds the fixed structure (2) without intermediate fastening.

13. Set (40) of at least two adjacent seats comprising first and second adjacent seats, **characterised in that** at least one of the first and second seats is a seat (30) according to any of claims 10 to 12, and **in that** the textile strip (10) forms at least partially the safety belt (20) of the first seat and the safety belt (20) of the second seat.

14. Vehicle comprising a seat (30) according to any of claims 10 to 12 or a set (40) of at least two adjacent seats according to claim 13, the textile strip (10) being especially fastened to a fixed structure (2) of at least one seat (30) or to a fixed structure (2) of the passenger compartment of the vehicle.

15. Method of fastening a safety belt (20) to a fixed structure (2) of a seat (30) or of a passenger compartment, **characterised in that** it comprises the following step:
- a textile strip (10) according to any of claims 1 or 13 is folded on itself in order to form a textile strip buckle surrounding the fixed structure (2) of the seat (30) or of the passenger compartment by inserting one end (1, 1a) of the textile strip (10) into the notch (4) made in the textile strip (10).
